# EUROPÄISCHE PATENTSCHRIFT

(11) **EP 1 984 468 B1**
(45) Veröffentlichungstag und Bekanntmachung des Hinweises auf die Patenterteilung: **17.11.2010**
(21) Anmeldenummer: 06830056.5
(22) Anmeldetag: 21.11.2006
(51) Int. Cl.: C09J 5/00

(54) **VERFAHREN ZUM VERKLEBEN VON WERKSTOFFEN MIT NANOSKALIGEN, SUPERPARAMAGNETISCHEN POLY(METH)ACRYLATPOLYMEREN**
METHOD OF BONDING MATERIALS OF CONSTRUCTION USING NANOSCALE, SUPERPARAMAGNETIC POLY(METH)ACRYLATE POLYMERS
PROCEDE DE LIAISON DE MATERIAUX BRUTS AVEC DES POLYMERES POLY(METH)ACRYLATE SUPERPARAMAGNETIQUES NANOMETRIQUES

(30) Priorität: 16.02.2006 DE 102006007563
(43) Veröffentlichungstag der Anmeldung: 29.10.2008
(73) Patentinhaber: Evonik Röhm GmbH, 64293 Darmstadt (DE)
(72) Erfinder: ROOS, Sebastian, 65779 Kelkheim (DE); LÖHDEN, Gerd, 45136 Essen (DE); SCHATTKA, Jan Hendrik, 63454 Hanau (DE); BRAUM, Manfred, 55126 Mainz (DE); PRIDÖHL, Markus, 63538 Grosskrotzenburg (DE); ZIMMERMANN, Guido, 50321 Brühl (DE); HÜTHER, Andreas, 63755 Alzenau (DE)
(86) Internationale Anmeldenummer: PCT/EP2006/068707
(87) Internationale Veröffentlichungsnummer: WO 2007/093237

(56) Entgegenhaltungen:
- DE-A1- 19 924 138
- DE-A1- 19 954 960

## Beschreibung

Die Erfindung betrifft ein Verfahren zur Verklebung von verschiedenen Werkstoffen mit Hybridmaterialien enthaltend nanoskalige, superparamagnetische, ferromagnetische, ferrimagnetische oder paramagnetische Pulver umhüllt oder teilweise nicht umhüllt von Poly(meth)acrylaten und deren Verwendung.

### Stand der Technik

In der DE 100 37 883 (Henkel) werden 0,1 Gew.-% - 70 Gew.-% magnetische Partikel eingesetzt, um ein Substrat mittels Mikrowellenstrahlung zu erwärmen. Als Substrat wird ein Klebstoff verwendet, der durch die Erwärmung abbindet. Die Erwärmung des Klebers kann auch ausgenutzt werden, um den Kleber zu erweichen. Eine Wechselwirkung zwischen Partikeln und Polymer wird nicht beschrieben.

In der DE 100 40 325 (Henkel) wird ein Verfahren beschrieben, indem man einen mit Mikrowellen aktivierbaren Primer und einen Schmelzklebstoff auf Substrate aufträgt und mit Mikrowellen erhitzt und verklebt.

DE 102 58 951 (Sus Tech GmbH) beschreibt eine Klebefolie aus einem Compound aus Ferritteilchen (mit Ölsäure oberflächenmodifiziert) und PE, PP, EVA und Copos. Die Ferritteilchen können auch mit Silanen, quartären Ammoniumverbindungen und gesättigten/ungesättigten Fettsäuren und Salzen starken anorganischen Säuren modifiziert sein.

DE 199 24 138 (Henkel) beschreibt eine Klebstoffzusammensetzung mit nanoskaligen Teilchen.

EP 498 998 beschreibt ein Verfahren zur Erwärmung eines Polymers durch Mikrowellen, wobei ferromagnetische Teilchen in der Polymermatrix dispergiert werden und Mikrowellen eingestrahlt werden. Die ferromagnetischen Teilchen werden lediglich in der Polymermatrix dispergiert.

WO 01/28 771 (Loctite) beschreibt eine härtbare Zusammensetzung aus 10 Gew.-% - 40 Gew.-% Teilchen, die Mikrowellen absorbieren können, einer härtbaren Komponente und einem Härter. Die Komponenten werden lediglich gemischt.

WO 03/04 2315 (Degussa) offenbart eine Klebstoffzusammensetzung zur Herstellung von Duromeren aus einem Polymergemisch und Vernetzerpartikeln, wobei die Vernetzerpartikel aus Füllstoffen, die ferromagnetisch, ferri-, superpara- oder paramagnetisch sind und an die Füllstoffteilchen chemisch gebundene Vernetzereinheiten bestehen. Die Füllstoffpartikel können auch oberflächenmodifiziert sein. Die Füllstoffpartikel können eine Kern-Schale-Struktur aufweisen. Der erhaltene Klebstoffverband kann wieder gelöst werden, indem man ihn auf eine höhere Temperatur als die Ceilingtemperatur erhitzt oder auf eine Temperatur erhitzt, die ausreichend ist, um die chemischen Bindungen der thermisch labilen Gruppen der oberflächenmodifizierten Füllstoffpartikel zu brechen.

In DE-A-101 63 399 wird eine nanopartikuläre Zubereitung beschrieben, die eine kohärente Phase und wenigstens eine darin dispergierte, teilchenförmige Phase superparamagnetischer, nanoskaliger Teilchen aufweist. Die Teilchen weisen einen volumengemittelten Teilchendurchmesser im Bereich von 2 bis 100 nm auf und wenigstens ein Metallmischoxid der allgemeinen Formel MIIMIIIO₄, worin MII für eine erste Metallkomponente steht, die wenigstens zwei voneinander verschiedene, zweiwertige Metalle umfasst und MIII für eine weitere Metallkomponente steht, die wenigstens ein dreiwertiges Metall umfasst. Die kohärente Phase kann aus Wasser, einem organischen Lösungsmittel, einem polymerisierbaren Monomeren, einer polymerisierbaren Monomermischung, einem Polymeren und Mischungen bestehen. Dabei sind Zubereitungen in Form einer Klebstoffzusammensetzung bevorzugt.

In der DE10116721 (BMW) werden Zweikomponenten-Klebstoffe für den Einsatz im Karosseriebau, insbesondere zum Abdichten einer Bördelnaht, beschrieben. Dieser Klebstoff reagiert in zwei Stufen, wobei als erste Reaktion eine chemische Zweikomponenten-Reaktion stattfindet, die zu einem auswaschbeständigen und grifffesten Produkt führt. Die Reaktion läuft bei Raumtemperatur oder mit leichter Erwärmung ab. Die Erwärmung erfolgt induktiv oder durch IR-Strahlung. Die zweite ebenfalls chemische Reaktion findet im Grundierungsofen statt.

In der EP 1186642 (Sika) werden Zweikomponentensysteme mit einer Harzkomponente und einer Härterkomponente beschrieben, deren Teilhärtung beispielsweise durch UV-Strahlung erfolgt, um die gewünschte Frühfestigkeit und Anfassbarkeit zu erhalten. Das System durchläuft zwei nicht gleichartige Härtungsprozesse, wobei der eine Härtungsprozess eine bei Raumtemperatur ablaufende Reaktion zwischen mindestens einem Harz und mindestens einem Härter ist und wobei mindestens ein weiteres vernetzendes System vorhanden ist, das mittels eines Härtungsprozesses vernetzt.

Aufgabe der Erfindung ist es, ein Verfahren zur Verklebung von verschiedenen Werkstoffen, vorzugsweise ein 2-stufiges Verfahren, zur Verfügung zu stellen.

Gelöst wird die Aufgabe durch ein Verfahren zur Verklebung mit Hybridmaterial enthaltend nanoskalige superparamagnetische, ferromagnetische, ferrimagnetische oder paramagnetische Partikel in einem Kern-Schale Aufbau umhüllt von Polymeren oder durch Hybridmaterialien die Mischungen aus umhüllten und nicht umhüllten nanoskaligen superparamagnetischen, ferromagnetischen, ferrimagnetischen oder paramagnetischen Partikeln enthalten, wobei das Hybridmaterial in einer Klebstoffmatrix enthalten ist. Vorzugsweise werden zur Umhüllung der Partikel Poly(meth)acrylate verwendet. Man erreicht durch die Verwendung ummantelter nanoskaliger, superparamagnetischer, ferromagnetischer, ferrimagnetischer oder paramagnetischer Partikel in einem Kern-Schale Aufbau mit dem Polymer eine verbesserte Wechselwirkung des Partikels mit der Polymerumhüllung und kann so mit weniger nanoskaligen, superparamagnetischen, ferromagnetischen, ferrimagnetischen oder paramagnetischen Partikeln als im Stand der Technik erforderlich die Erwärmung des Klebers erreichen.

Mit den erfindungsgemäßen Klebstoffen, enthaltend Hybridmaterialien, können 2-Stufen Klebstoffe dargestellt werden, die eine einfache Klebwirkung (vorkleben, fixieren) und eine endgültige Klebung durch Einbringung hoher Energie, in einem Material verwirklichen. Die erste Stufe ist eine physikalische, die zweite Stufe eine chemische Umsetzung. Vorzugsweise werden die erfindungsgemäßen Hybridmaterialien in die Epoxidmatrix eines Epoxidklebstoffes eingebettet. In Epoxyklebstoffen werden durch die Einbringung von Energie, vorzugsweise induktiver Energie, die zwei Klebestufen realisiert, indem in einer ersten Stufe die erfindungsgemäß von Polymeren ummantelten nanoskaligen, superparamagnetischen, ferromagnetischen, ferrimagnetischen oder paramagnetischen Partikel gelieren und damit eine Vorklebung ermöglichen, und in einem 2. Schritt durch Einbringung weiterer Energie die Vernetzung der Epoxymatrix, die endgültige Klebung erfolgt.

Es wurde gefunden, dass Werkstoffe hervorragend verklebt werden können, die induktiv nicht erwärmbar sind. Mittels induktiver Energie wird gezielt der Klebstoff erwärmt und damit vorgeliert bzw. ausgehärtet. Im ersten Schritt (Vorgelierung) werden durch das Einbringen der Energie, vorzugsweise induktiver Energie, die Polymere, die die nanoskaligen, superparamagnetischen, ferromagnetischen, ferrimagnetischen oder paramagnetischen Partikel ummanteln, angequollen bzw. gelöst. In Verbindung mit Weichmachern, die in der umgebenden Matrix enthalten sind, entsteht eine Paste, die sich gummielastisch wie ein Gel verhält. Das Vorgelieren erfolgt bei Temperaturen zwischen 50°C und 100°C. Der vorgelierte Klebstoff stellt eine ausreichend gute Verbindung zwischen den zu verklebenden Werkstoffen her. Damit wird schon ein auswaschbeständiges und grifffestes Produkt erzeugt, wie es beispielsweise in der Automobilindustrie gefordert wird. Im späteren Aushärtungsschritt werden durch erneute Energiezufuhr Vernetzungsreaktionen initiiert, die den endgültigen Materialverbund herstellen. Der Aushärtungsschritt findet bei Temperaturen von 140°C -200°C statt.

Die Erwärmung des zu verklebenden Werkstoffes entfällt. Unerwünschte Erscheinungen, wie beispielsweise die Verwerfung des Werkstoffes (Karosserieteile) durch das Erwärmen, können damit vermieden werden. Zudem können natürlich auch induktiv erwärmbare Materialien verklebt werden. Vorteilhaft ist hier wiederum, dass auch dicke Klebeschichten aktiviert werden können, ohne das zu verklebende Material unnötig stark erwärmen zu müssen, was ebenfalls zu Verwerfungen führen würde. Der Einsatz dickerer Klebschichten ist vor allem bei wechselnden Maßtoleranzen gewünscht. Unzureichende Gelierung oder Überhitzungen mit verharzten, schwer zu entfernenden Ölen waren bei den herkömmlichen Klebeverfahren die Folge.

Die erfindungsgemäßen Klebstoffe können durch induktive Energie direkt aktiviert werden. Somit können alle denkbaren Materialkombinationen verklebt werden, da die Erwärmbarkeit des zu verklebenden Werkstoffes keinen Einfluß hat. Es können induktiv erwärmbare Werkstoffe miteinander oder mit nicht induktiv erwärmbaren Werkstoffen verklebt werden, aber auch nicht induktiv erwärmbare Werkstoffe miteinander.

Die nanoskaligen, superparamagnetischen, ferromagnetischen, ferrimagnetischen oder paramagnetischen Partikel werden ohne vorherige Aktivierung oder Vorbeschichtung in einem System aus einem oder mehreren Monomeren, Wasser und einem inerten Lösungsmittel, gegebenenfalls unter Zuhilfenahme eines Emulgators und/ oder eines hydrophoben Agens, emulgiert und die Polymerisation wird anschließend mit den üblichen Methoden gestartet. Die nanoskaligen, superparamagnetischen, ferromagnetischen, ferrimagnetischen oder paramagnetischen Partikel werden in einem Kern-Schale Aufbau mit einer oder mehreren Schalen aus Polymeren oder Polymermischungen umschlossen. Die Kerne können mit einer Schale, aber auch mit mehreren Schalen, oder einer Schale mit Gradienten umhüllt werden. Die Schalen können gleiche oder verschiedene Polymerzusammensetzungen aufweisen, bzw. innerhalb einer Schale die Polymerzusammensetzung verändern (Gradienten).

In einem ersten Schritt wird mittels Miniemulsionspolymerisation eine erste Schale des Kern-Schale-Systems auf den Kern aufgebracht. Die gegebenenfalls weiteren Schalen werden durch Zudosierung des Monomerstroms in situ gebildet.

Als Monomere werden Mischungen aus (Meth)acrylaten verwendet.

Polymethylmethacrylate werden im Allgemeinen durch radikalische Polymerisation von Mischungen erhalten, die Methylmethacrylat enthalten. Im Allgemeinen enthalten diese Mischungen mindestens 40 Gew.-%, vorzugsweise mindestens 60 Gew.-% und besonders bevorzugt mindestens 80 Gew.-%, bezogen auf das Gewicht der Monomere, Methylmethacrylat. Daneben können diese Mischungen zur Herstellung von Polymethylmethacrylaten weitere (Meth)acrylate enthalten, die mit Methylmethacrylat copolymerisierbar sind. Der Ausdruck (Meth)acrylate bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Diese Monomere sind weithin bekannt. Zu diesen gehören unter anderem (Meth)acrylate, die sich von gesättigten Alkoholen ableiten, wie beispielsweise Methylacrylat, Ethyl(meth)acrylat, Propyl(meth)acrylat, n-Butyl(meth)acrylat, tert.-Butyl(meth)acrylat, Pentyl(meth)acrylat und 2-Ethylhexyl(meth)acrylat; (Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat; Aryl(meth)acrylate, wie Benzyl(meth)acrylat oder Phenyl(meth)acrylat, wobei die Arylreste jeweils unsubstituiert oder bis zu vierfach substituiert sein können; Cycloalkyl(meth)acrylate, wie 3-Vinylcyclohexyl(meth)acrylat, Bornyl(meth)acrylat; Hydroxylalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat; Glycoldi(meth)acrylate, wie 1,4-Butandiol(meth)acrylat, (Meth)acrylate von Etheralkoholen, wie Tetrahydrofurfuryl(meth)acrylat, Vinyloxyethoxyethyl(meth)acrylat; Amide und Nitrile der (Meth)acrylsäure, wie N-(3-Dimethylaminopropyl)(meth)acrylamid, N-(Diethylphosphono)(meth)acrylamid, 1-Methacryloylamido-2-methyl-2-propanol; schwefelhaltige Methacrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid; mehrwertige (Meth)acrylate, wie Trimethyloylpropantri(meth)acrylat.

Neben den zuvor dargelegten (Meth)acrylaten können die zu polymerisierenden Zusammensetzungen auch weitere ungesättigte Monomere aufweisen, die mit Methylmethacrylat und den zuvor genannten (Meth)acrylaten copolymerisierbar sind. Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1 ; Acrylnitril; Vinylester, wie Vinylacetat; Styrol, substituierte Styrole mit einem Alkylsubstituenten in der Seitenkette, wie z. B. [alpha]-Methylstyrol und [alpha]-Ethylstyrol, substituierte Styrole mit einem Alkylsubstituenten am Ring, wie Vinyltoluol und p-Methylstyrol, halogenierte Styrole, wie beispielsweise Monochlorstyrole, Dichlorstyrole, Tribromstyrole und Tetrabromstyrole; Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole; Vinyl- und Isoprenylether; Maleinsäurederivate, wie beispielsweise Maleinsäureanhydrid, Methylmaleinsäureanhydrid, Maleinimid, Methylmaleinimid; und Diene, wie beispielsweise Divinylbenzol.

Im Allgemeinen werden diese Comonomere in einer Menge von 0 bis 60 Gew.-%, vorzugsweise 0 bis 40 Gew.-% und besonders bevorzugt 0 bis 20 Gew.-%, bezogen auf das Gewicht der Monomeren, eingesetzt, wobei die Verbindungen einzeln oder als Mischung verwendet werden können.

Die Polymerisation wird im Allgemeinen mit bekannten Radikalinitiatoren gestartet. Zu den bevorzugten Initiatoren gehören unter anderem die in der Fachwelt weithin bekannten Azoinitiatoren, wie AIBN und 1,1-Azobiscyclohexancarbonitril, wasserlösliche Radikalbildner, wie beispielsweise Peroxosulfate oder Wasserstoffperoxid, sowie Peroxyverbindungen, wie Methylethylketonperoxid, Acetylacetonperoxid, Dilaurylperoxyd, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoylperoxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Diese Verbindungen werden häufig in einer Menge von 0,01 bis 10 Gew.-%, vorzugsweise von 0,1 bis 3 Gew.-%, bezogen auf das Gewicht der Monomeren, eingesetzt. Hierbei können verschiedene Poly(meth)acrylate eingesetzt werden, die sich beispielsweise im Molekulargewicht oder in der Monomerzusammensetzung unterscheiden.

Dem Hybridmaterial können auch hydrophobe Agenzien zugegeben werden. Geeignet sind beispielsweise Hydrophobe aus der Gruppe der Hexadecane, Tetraethylsilane, Oligostyrole, Polyester oder Hexafluorbenzole. Besonders bevorzugt werden einpolymerisierbare Hydrophobe, da diese beim späteren Gebrauch nicht ausgeschwitzt werden.

Besonders bevorzugt sind (Meth)acrylate, die sich von gesättigten Alkoholen mit 6-24 C-Atomen ableiten, wobei der Akoholrest linear oder verzweigt sein kann.

So umfaßt beispielsweise eine Monomerzusammensetzung ethylenisch ungesättigte Monomere der Formel (I) 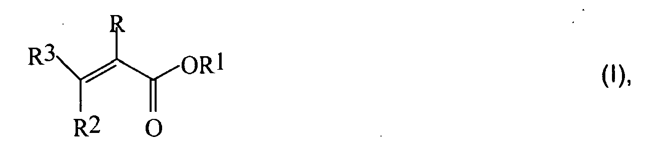 worin R Wasserstoff oder Methyl, R¹ einen linearen oder verzweigten Alkylrest mit 6 bis 40 Kohlenstoffatomen, vorzugsweise 6 bis 24 Kohlenstoffatomen, R² und R³ unabhängig Wasserstoff oder eine Gruppe der Formel -COOR' bedeuten, wobei R' Wasserstoff oder einen linearen oder verzweigten Alkylrest mit 6 bis 40 Kohlenstoffatomen darstellt.

Die Esterverbindungen mit langkettigem Alkoholrest, lassen sich beispielsweise durch Umsetzen von (Meth)acrylaten, Fumaraten, Maleaten und/oder den entsprechenden Säuren mit langkettigen Fettalkoholen erhalten, wobei im allgemeinen eine Mischung von Estern, wie beispielsweise (Meth)acrylaten mit verschieden langkettigen Alkoholresten entsteht. Zu diesen Fettalkoholen gehören unter anderem Oxo Alcohol^{®} 7911 und Oxo Alcohol^{®} 7900, Oxo Alcohol^{®} 1100 von Monsanto; Alphanol^{®} 79 von ICI; Nafol^{®} 1620, Alfol^{®} 610 und Alfol^{®} 810 von Condea; Epal^{®} 610 und Epal^{®} 810 von Ethyl Corporation; Linevol^{®} 79, Linevol^{®} 911 und Dobanol^{®} 25L von Shell AG; Lial 125 von Augusta^{®} Mailand; Dehydad^{®} und Lorol^{®} von Henkel KGaA sowie Linopol^{®} 7-11 und Acropol^{®}91 Ugine Kuhlmann.

Die zuvor genannten ethylenisch ungesättigten Monomere können einzeln oder als Mischungen eingesetzt werden. In bevorzugten Ausführungsformen des erfindungsgemäßen Verfahrens sind mindestens 50 Gewichtsprozent der Monomere, vorzugsweise mindestens 60 Gewichtsprozent der Monomere, besonders bevorzugt mehr als 80 Gew.-% der Monomere, bezogen auf das Gesamtgewicht der ethylenisch ungesättigten Monomere, (Meth)acrylate.

Darüber hinaus sind Monomerzusammensetzungen bevorzugt, die mindestens 60 Gewichtsprozent, besonders bevorzugt mehr als 80 Gew.-% (Meth)acrylate mit Alkyl- oder Heteroalkylketten enthalten, die mindestens 6 Kohlenstoffatome aufweisen, bezogen auf da Gesamtgewicht der ethylenisch ungesättigten Monomere.

Neben den (Meth)acrylaten sind auch Maleate und Fumarate bevorzugt, die zusätzlich langkettige Alkoholreste aufweisen.

Beispielsweise können Hydrophobe verwendet werden, die aus der Gruppe der Alkyl(meth)acrylate mit 10 bis 30 Kohlenstoffatomen in der Alkoholgruppe abgeleitet sind, insbesondere Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat, Hexadecyl(meth)acrylat, 2-Methylhexadecyl(meth)acrylat, Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat, Stearyleicosyl(meth)acrylat, Docosyl(meth)acrylat, Eicosyltetratriacontyl(meth)acrylat, Lauryl(meth)acrylate, Stearyl(meth)acrylate, Behenyl(meth)acrylate und/oder Methacrylsäureester und deren Mischungen.

Um das Molekulargewicht der Polymerisate zu steuern, kann man die Polymerisation gegebenenfalls in Gegenwart von Reglern durchführen. Als Regler eigenen sich beispielsweise Aldehyde wie Formaldehyd, Acetaldehyd, Propionaldehyd, n-Butyraldehyd und Isobutyraldehyd, Ameisensäure, Ammoniumformiat, Hydroxylammoniumsulfat und Hydroxylammoniumphosphat. Weiterhin können Regler eingesetzt werden, die Schwefel in organisch gebundener Form enthalten, wie SH-Gruppen aufweisende organische Verbindungen wie Thioglykolessigsäure, Mercaptopropionsäure, Mercaptoethanol, Mercaptopropanol, Mercaptobutanol, Mercaptohexanol, Dodecylmercaptan und tert-Dodecylmercaptan. Als Regler können weiterhin Salze des Hydrazins wie Hydraziniumsulfat eingesetzt werden. Die Mengen an Regler, bezogen auf die zu polymerisierenden Monomeren, betragen 0 bis 5%, vorzugsweise 0,05 bis 0,3 Gew.-%.

Die erfindungsgemäßen Kerne, die nanoskaligen, superparamagnetischen, ferromagnetischen, ferrimagnetischen oder paramagnetischen Partikel, sind aus einer Matrix und einer Domäne aufgebaut. Die Partikel sind aus magnetischen Metalloxid-Domänen mit einem Durchmesser von 2 bis 100 nm in einer nichtmagnetischen Metalloxid- oder Metalldioxid-Matrix aufgebaut. Die magnetischen Metalloxid-Domänen können aus der Gruppe der Ferrite, besonders bevorzugt aus der Gruppe der Eisenoxide, ausgewählt sein. Diese können wiederum von einer nichtmagnetischen Matrix, beispielsweise aus der Gruppe der Siliziumoxide vollständig oder teilweise umschlossen sein.

Die nanoskaligen, superparamagnetischen, ferromagnetischen, ferrimagnetischen oder paramagnetischen Partikel liegen als Pulver vor. Das Pulver kann aus aggregierten Primärpartikeln bestehen.

Unter aggregiert im Sinne der Erfindung sind dreidimensionale Strukturen von verwachsenen Primärpartikeln zu verstehen. Mehrere Aggregate können sich zu Agglomeraten verbinden. Diese Agglomerate lassen sich leicht wieder trennen. Im Gegensatz hierzu ist die Zerlegung der Aggregate in die Primärpartikel in der Regel nicht möglich.

Der Aggregatdurchmesser des superparamagnetischen Pulvers kann bevorzugt größer als 100 nm und kleiner als 1 µm sein. Vorzugsweise können die Aggregate des superparamagnetischen, ferromagnetischen, ferrimagnetischen oder paramagnetischen Pulvers wenigstens in einer Raumrichtung einen Durchmesser von nicht mehr als 250 nm aufweisen.

Unter Domänen sind räumlich voneinander getrennte Bereiche in einer Matrix zu verstehen. Die Domänen des superparamagnetischen, ferromagnetischen, ferrimagnetischen oder paramagnetischen Pulvers haben einen Durchmesser zwischen 2 und 100 nm.

Die Domänen können auch nichtmagnetische Bereiche aufweisen, die keinen Beitrag zu den magnetischen Eigenschaften des Pulvers leisten.

Zusätzlich können auch magnetische Domänen vorliegen, die aufgrund ihrer Größe keinen Superparamagnetismus zeigen und eine Remanenz induzieren. Dies führt zur Erhöhung der volumenspezifischen Sättigungsmagnetisierung. Der Anteil dieser Domänen ist im Vergleich zur Anzahl an superparamagnetischen, ferromagnetischen, ferrimagnetischen oder paramagnetischen Domänen jedoch gering. Gemäß der vorliegenden Erfindung gilt, dass das superparamagnetische, ferromagnetische, ferrimagnetische oder paramagnetische Pulver eine solche Anzahl an superparamagnetischen, ferromagnetischen, ferrimagnetischen oder paramagnetischen Domänen enthält, um das die erfindungsgemäße Zubereitung mittels eines magnetischen oder elektromagnetischen Wechselfeldes erwärmen zu können.

Die Domänen des superparamagnetischen, ferromagnetischen, ferrimagnetischen oder paramagnetischen Pulvers können von der umgebenden Matrix vollständig oder nur teilweise umschlossen sein. Teilweise umschlossen heißt, dass einzelne Domänen aus der Oberfläche eines Aggregates herausragen können.

Die Domänen können ein oder mehrere Metalloxide aufweisen.

Die magnetischen Domänen können bevorzugt die Oxide von Eisen, Kobalt, Nickel, Chrom, Europium, Yttrium, Samarium oder Gadolinium enthalten. In diesen Domänen können die Metalloxide in einer einheitlichen Modifikation oder in verschiedenen Modifikationen vorliegen.

Eine besonders bevorzugte magnetische Domäne ist Eisenoxid in der Form von gamma-Fe₂O₃ (γ-Fe₂O₃), Fe₃O₄, Mischungen aus gamma-Fe₂O₃ (γ-Fe₂O₃) und/oder Fe₃O₄.

Die magnetischen Domänen können weiterhin als Mischoxid wenigstens zweier Metalle mit den Metallkomponenten Eisen, Kobalt, Nickel, Zinn, Zink, Cadmium, Magnesium, Mangan, Kupfer, Barium, Magnesium, Lithium oder Yttrium vorliegen.

Die magnetischen Domänen können weiterhin Stoffe mit der allgemeinen Formel MIIFe₂O₄ sein, worin MII für eine Metallkomponente steht, die wenigstens zwei voneinander verschiedene, zweiwertige Metalle umfasst. Bevorzugt kann eines der zweiwertigen Metalle Mangan, Zink, Magnesium, Kobalt, Kupfer, Cadmium oder Nickel sein.

Weiterhin können die magnetischen Domänen aus ternären Systemen der allgemeinen Formel (Ma1-x-y MbxFey)IIFe₂IIIO₄ aufgebaut sein, wobei Ma, beziehungsweise Mb die Metalle Mangan, Kobalt, Nickel, Zink, Kupfer, Magnesium, Barium, Yttrium, Zinn, Lithium, Cadmium, Magnesium, Calcium, Strontium, Titan, Chrom, Vanadium, Niob, Molybdän sein, mit x = 0,05 bis 0,95, y = 0 bis 0,95 und x+y ≤ 1.

Besonders bevorzugt können ZnFe₂O₄, MnFe₂O₄, Mn_{0,6}Fe_{0,4}Fe₂O₄, Mn_{0,5}Zn_{0,5}Fe₂O₄, Zn_{0,1}Fe_{1,9}O₄, Zn₀,₂Fe_{1,8}O₄, Zn_{0,3}Fe_{1,7}O4, Zn_{0,4}Fe_{1,6}O₄ oder Mn_{0,39}Zr_{0,27}Fe_{2,34}O₄, MgFe₂O₃, Mg_{1,2}Mn_{0,2}Fe_{1,6}O₄, Mg_{1,4}Mn_{0,4}Fe_{1,2}O₄, Mg_{1,6}Mn_{0,6}Fe_{0,8}O₄, Mg_{1,8}Mn_{0,8}Fe_{0,4}O₄ sein.

Die Wahl des Metalloxides der nichtmagnetischen Matrix ist nicht weiter beschränkt. Bevorzugt können die Oxide von Titan, Zirkon, Zink, Aluminium, Silizium, Cer oder Zinn sein.

Im Sinne der Erfindung zählen auch Metalldioxide, wie beispielsweise Siliziumdioxid, zu den Metalloxiden.

Weiterhin können die Matrix und/oder die Domänen amorph und/oder kristallin vorliegen.

Der Anteil der magnetischen Domänen im Pulver ist nicht beschränkt, solange die räumliche Trennung von Matrix und Domänen gegeben ist. Vorzugsweise kann der Anteil der magnetischen Domänen im superparamagnetischen, ferromagnetischen, ferrimagnetischen oder paramagnetischen Pulver 10 bis 100 Gew.-% betragen.

Geeignete superparamagnetische Pulver werden beispielsweise in EP-A-1284485 sowie in der DE 10317067 beschrieben, auf die im vollen Umfang Bezug genommen wird.

Die erfindungsgemäße Zubereitung kann bevorzugt einen Anteil an superparamagnetischem Pulver in einem Bereich von 0,01 bis 60 Gew.-% aufweisen, bevorzugt einem Bereich von 0,05 bis 50 Gew.-% und ganz besonders bevorzugt in einem Bereich von 0,1 bis 10 Gew.-%.

Die superparamagnetischen, ferromagnetischen, ferrimagnetischen oder paramagnetischen Pulver werden mit einem

Miniemulsionspolymerisationsverfahren zu den erfindungsgemäßen Hybridmaterialien weiterverarbeitet.

Die Miniemulsionspolymerisation kann folgendermaßen durchgeführt werden:
a)
   In einem ersten Schritt wird das nanoskalige Pulver in den Monomeren oder der Monomermischung oder in Wasser dispergiert.
b)
   Im zweiten Schritt wird ein Monomeres oder eine Monomermischung mit hydrophoben Agenzien und Emulgator in Wasser dispergiert.
c)
   Im dritten Schritt werden die Dispersionen aus a) und b) mit Hilfe eines Emulgators mittels Ultraschall, Membran, Rotor-Stator System, Rührer oder Hochdruck dispergiert.
d)
   Die Polymerisation der Dispersion aus c) wird thermisch gestartet.

Der Anteil der superparamagnetischen, ferromagnetischen, ferrimagnetischen oder paramagnetischen Pulver in Polymeren kann zwischen 1-99 Gew.-% liegen.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiel

Die Viskositätsänderung als wichtiger Parameter für die Eigenschaften von Klebstoffen wurde untersucht.

Ein herkömmlicher Klebstoff (Betamate 1020, Fa. Dow, Schweiz) wurde langsam von Raumtemperatur auf 93°C erwärmt und wieder auf Raumtemperatur abgekühlt. Dies entspricht dem Temperaturprofil für die Vorgelierung bei 2-Stufen-Klebstoffen. Die Energie wurde durch herkömmliche elektrische Heizleistung apparatebedingt eingebracht. Die Viskosität bei 35°C und 65°C werden untersucht (Beispiel V).

Diesem Klebstoffmaterial werden für eine gleiche Untersuchungsreihe die erfindungsgemäßen nanoskaligen superparamagnetischen, ferromagnetischen, ferrimagnetischen oder paramagnetischen Partikel umhüllt von Poly(meth)acrylaten in einer Menge von 12 Gew.-% zugefügt. Auch hier wird die Viskosität bei 35°C und 65°C (Beispiel E1) untersucht.

In einer weiteren Versuchsreihe wurden dem herkömmlichen Klebstoff (Betamate 1020, Fa. Dow, Schweiz) weniger Thixotropiermittel und wiederum 12 Gew.-% der erfindungsgemäßen nanoskaligen superparamagnetischen, ferromagnetischen, ferrimagnetischen oder paramagnetischen Partikel umhüllt von Poly(meth)acrylaten zugesetzt (Beispiel E2).

| | Viskosität bei 35°C | | Viskosität bei 65°C | |
|---|---|---|---|---|
| | [Pa s] | | [Pa s] | |
| | Vor Erwärmung | Nach Erwärmung | Vor Erwärmung | Nach Erwärmung |
| Beispiel V | 300 | 400 | 45 | 45 |
| Beispiel E 1 | 750 | 1100 | 100 | 400 |
| Beispiel E 2 | 350 | 1050 | 50 | 380 |

Bei den herkömmlichen Klebstoffen (V) liegen die Viskositäten vor dem Aufheizen und nach der Erwärmung dicht beieinander. Bei der Zugabe von erfindungsgemäßen nanoskaligen superparamagnetischen, ferromagnetischen, ferrimagnetischen oder paramagnetischen Partikel umhüllt von Poly(meth)acrylaten erhöhen sich die Viskositäten signifikant. Werden Thixotropiermittel weggelassen (E2) liegt die Anfangsviskosität noch relativ niedrig, bleibt jedoch nach der Erwärmung auf einem weitaus höheren Niveau. Bei der Verwendung von Thixotropiermittel und erfindungsgemäßen nanoskaligen superparamagnetischen, ferromagnetischen, ferrimagnetischen oder paramagnetischen Partikel umhüllt von Poly(meth)acrylaten (E1) liegen die Viskositäten vor dem Erwärmen und nach der Erwärmung deutlich über den Viskositäten herkömmlicher Klebstoffe.

Sowohl bei 35°C, als auch bei 65°C wird eine verbesserte Vorklebung durch höhere Viskositäten erreicht.

### Klebung mittels Zufuhr induktiver Energie

In eine herkömmliche Epoxidklebstoffmatrix werden 12 Gew.-% Hybridmaterialien eingearbeitet. Auf einen induktiv nicht erwärmbaren Werkstoff wurde eine Klebstoffraupe mit 1 cm Breite und 0,5 cm Höhe aus dieser Mischung aufgebracht. Zur Einbringung von induktiver Energie wird eine dreiwindige Zylinderspule (Fa. IFF, Ismaning) mit einem Generator des Typs STS M260S mit 100% der Leistung verwendet. Die Spule wird einmal über die Klebstoffraupe gefahren, in einem Abstand von 5 mm und mit einer Geschwindigkeit von 1,25 mm/s. Der Temperaturverlauf wurde mit einem faseroptischen Thermometer gemessen, welches mittig in der Klebstoffraupe angeordnet wurde. Es konnte gezeigt werden, dass der Klebstoff von 25°C auf 90°C innerhalb von 20 s mittels induktiver Energie erwärmt werden konnte.

## Patentansprüche

1. Klebstoff enthaltend nanoskalige superparamagnetische, ferromagnetische, ferrimagnetische oder paramagnetische Partikel in einem Kern-Schale Aufbau umhüllt von Poly(meth)acrylaten.

2. Klebstoff nach Anspruch 1 enthaltend nanoskalige superparamagnetische, ferromagnetische, ferrimagnetische oder paramagnetische Partikel in einem Kern-Schale Aufbau umhüllt von Poly(meth)acrylaten und nanoskalige superparamagnetische, ferromagnetische, ferrimagnetische oder paramagnetische Partikel nicht umhüllt von Poly(meth)acrylaten.

3. Klebstoff nach Anspruch 1 enthaltend nanoskalige superparamagnetische, ferromagnetische, ferrimagnetische oder paramagnetische Partikel in einem Kern-Schale Aufbau umhüllt von Poly(meth)acrylaten und nanoskalige superparamagnetische, ferromagnetische, ferrimagnetische oder paramagnetische Partikel nicht umhüllt von Poly(meth)acrylaten in einer Epoxidharzmatrix.

4. Verfahren zum Verkleben von Werkstoffen mit Klebstoffen gemäß der Ansprüche 1 bis 3.

5. Verfahren gemäß Anspruch 4, **dadurch gekennzeichnet, dass** in einem ersten Schritt durch Temperaturerhöhung mittels induktiver Energie eine Vorgelierung des Klebstoffes erfolgt und in einem zweiten Schritt durch eine weitere Temperaturerhöhung die Aushärtung des Klebestoffes erfolgt.

6. Verfahren gemäß Anspruch 5, **dadurch gekennzeichnet, dass** die Vorgelierung bei Temperaturen von 50-100°C erfolgt.

7. Verfahren gemäß Anspruch 5, **dadurch gekennzeichnet, dass** die Aushärtung bei Temperaturen von 140°C-200°C erfolgt.

8. Verwendung des Verfahrens gemäß Anspruch 4 zur Verklebung von Werkstoffen mit mindestens einem nicht induktiv erwärmbaren Werkstoff.

9. Verwendung des Verfahrens gemäß Anspruch 4 im Automobilbau, Flugzeugbau, Schiffsbau, Schienenfahrzeugbau und der Raumfahrttechnologie.

## Claims

1. Adhesive comprising nanoscale superparamagnetic, ferromagnetic, ferrimagnetic or paramagnetic particles in a core/shell construction enveloped by poly(meth)acrylates.

2. Adhesive according to Claim 1 comprising nanoscale superparamagnetic, ferromagnetic, ferrimagnetic or paramagnetic particles in a core/shell construction enveloped by poly(meth)-acrylates and nanoscale superparamagnetic, ferromagnetic, ferrimagnetic or paramagnetic particles not enveloped by poly(meth)acrylates.

3. Adhesive according to Claim 1 comprising nanoscale superparamagnetic, ferromagnetic, ferrimagnetic or paramagnetic particles in a core/shell construction enveloped by poly(meth)-acrylates and nanoscale superparamagnetic, ferromagnetic, ferrimagnetic or paramagnetic particles not enveloped by poly(meth)acrylates in an epoxy resin matrix.

4. Method of adhesively bonding materials with adhesives according to Claims 1 to 3.

5. Method according to Claim 4, **characterized in that** in a first step the adhesive is pregelled by means of inductive energy through temperature increase and in a second step the adhesive is cured through a further temperature increase.

6. Method according to Claim 5, **characterized in that** the pregelling takes place at temperatures of 50-100°C.

7. Method according to Claim 5, **characterized in that** the curing takes place at temperatures of 140-200°C.

8. Use of the method according to Claim 4 for adhesively bonding materials to at least one material which cannot be heated inductively.

9. Use of the method according to Claim 4 in automotive construction, aircraft construction, shipbuilding, rail-vehicle construction and space-travel technology.

## Revendications

1. Adhésif contenant des particules nanoparticulaires, superparamagnétiques, ferromagnétiques, ferrimagnétiques ou paramagnétiques **en une structure à noyau-enveloppe** enrobées de poly(méth)acrylates.

2. Adhésif selon la revendication 1, contenant des particules nanoparticulaires, superparamagnétiques, ferromagnétiques, ferrimagnétiques ou paramagnétiques **en une structure à noyau-enveloppe** enrobées de poly(méth)acrylates et des particules nanoparticulaires, superparamagnétiques, ferromagnétiques, ferrimagnétiques ou paramagnétiques non enrobées de poly(méth)acrylates.

3. Adhésif selon la revendication 1, contenant des particules nanoparticulaires, superparamagnétiques, ferromagnétiques, ferrimagnétiques ou paramagnétiques **en une structure à noyau-enveloppe** enrobées de poly(méth)acrylates et des particules nanoparticulaires, superparamagnétiques, ferromagnétiques, ferrimagnétiques ou paramagnétiques non enrobées de poly(méth)acrylates, dans une matrice en résine époxy.

4. Procédé pour le collage de matériaux avec des adhésifs selon les revendications 1 à 3.

5. Procédé selon la revendication 4, **caractérisé en ce que** dans une première étape une pré-gélification de l'adhésif s'effectue par élévation de la température au moyen d'énergie inductive et dans une deuxième étape le durcissement de l'adhésif s'effectue par une nouvelle élévation de la température.

6. Procédé selon la revendication 5, **caractérisé en ce que** la pré-gélification s'effectue à des températures de 50-100 °C.

7. Procédé selon la revendication 5, **caractérisé en ce que** le durcissement s'effectue à des températures de 140 °C - 200 °C.

8. Utilisation du procédé selon la revendication 4, pour le collage de matériaux avec au moins un matériau inapte à être chauffé par induction.

9. Utilisation du procédé selon la revendication 4, dans la construction automobile, la construction aéronautique, la construction navale, la construction de véhicules sur rail et la technique aérospatiale.
